# EUROPEAN PATENT APPLICATION

(11) **EP 4 456 045 A1**
(43) Date of publication of application: **30.10.2024**
(21) Application number: 23169782.2
(22) Date of filing: 25.04.2023
(51) Int. Cl.: G09B 9/04

(54) **HUMAN-MACHINE-INTERACTION SYSTEM AND INTERACTION STRATEGY**

(71) Applicant: Continental Automotive Technologies GmbH, 30175 Hannover (DE)
(72) Inventor: Robakowski, Miroslaw, 90411 Nürnberg (DE); Hellert, Christian, 90411 Nürnberg (DE); Hota, Rudra Narayan, 90411 Nürnberg (DE)
(74) Representative: Continental Corporation

(57) **Abstract**

The invention relates to a computer-implemented method for simulating human behavior in the context of interactions between a human and an HMI system (11), a method for training, testing or validating a machine learning system for an HMI system (11) and an HMI system (11), and can be used in the field of automated driving.

The method for training a machine learning system to be deployed in an HMI system (11) for optimizing the communication from the HMI system (11) to the human by using training data comprising synthetic training data generated by using the computer-implemented method for simulating human behavior. The method comprises the steps:
- Given an output state vector (230) corresponding to a desired physiological response of the human for a given input state vector (203, 231), the optimal cue (104) to be generated by the HMI system (11) is identified during the training.
-Therefore, a reward (209) representing the conformity of the human's physiological response with a desired physiological response is calculated.
- The desired physiological response is depending on the task the HMI system (11) shall accomplish through generating and outputting the optimal cue (104).

Exemplary tasks comprise:
• Assisted or Automated Driving: HMI systems for drivers
• Aviation: HMI systems for pilots and co-pilots
• Rail transport: HMI systems for train drivers
• Control of machines: HMI systems for machine users.

## Description

The invention relates to a computer-implemented method for simulating human behavior in the context of interactions between a human and an HMI system, a method for training, testing or validating a machine learning system for an HMI system and an HMI system, and can be used in the field of assisted or automated driving.

Driver monitoring systems can be used to assess the awareness of a driver of a vehicle. Some of these systems rely on sensor data representing the interaction of the driver with the region. As an example, the frequency and amplitude of steering actions can be monitored by evaluating steering wheel angle sensor information. US 8742936 B2 shows a method and a control unit for detecting when the driver of a motor vehicle becomes inattentive. In order to be able to reliably draw conclusions about the presence of inattentiveness of the driver, it is proposed to observe not only a steering inactivity phase but also a steering action which follows the steering inactivity phase. A detected implementation of the steering inactivity phase and of the steering action are logically combined with one another, and the result of this logic combination is then used as a measure of the severity of the inattentiveness of the driver. In addition, the measure of the severity of the inattentiveness of the driver depends on at least one driver-specific parameter which is determined during the execution of the method. The inattentiveness of the driver can also be detected during the time interval in which the at least one driver-specific parameter is determined.

Advanced driver monitoring systems like e.g., DE 102006019112 A1, are deploying in-vehicle camera systems which are imaging the driver and evaluating for example gaze direction of the driver.

Such information can be used to issue an alert to the driver in case the driver monitoring system detects that the driver is not sufficiently aware or appears to be tired.

DE 102009006976 B4 discloses a driver assistance system which outputs information to the driver on the traffic situation in the surroundings and provides assistance, by vehicle components, in order for the driver to handle a current traffic situation, wherein the subjective perception of the driving by the driver is detected and analysed.

For higher levels of automated driving (> SAE level 2+), the driver has not always to be driving the vehicle himself. In such a situation there will not necessarily be any interaction between the driver and the vehicle.

In a situation where the automatically driving car needs to hand over control over the vehicle to the driver, the driver needs to be monitored and his ability to take over control needs to be assessed permanently.

Such an assessment could be executed through a machine learning system. In order to train such a machine learning system, training data needs to be generated representing various conditions of the driver, vehicle systems and traffic conditions.

It is a target of the present invention to provide a solution for generating such training data in particular through a simulation of human behavior and interaction between the human and various cues produced by the vehicle systems.

A starting point for creating the solution is based on the following considerations:
Simulating human behavior for developing and testing autonomous driving functions is well discussed for driving style adaptations, but only limited available for Human-Machine Interaction (HMI) systems. In the following, important contributions are summarized.

In US2021078608A1, a system and method for providing adaptive
trust calibration in driving automation is described which measures the trust of a driver in the automation of the vehicle. Thereby, a POMDP (Partially Observable Markov Decision Process) is used to capture physical states of the driver (e.g., gaze), the scene complexity and the transparency controls (e.g., cues). The hidden variables in the POMDP are workload and trust. Based on the hidden variables, the transparency controller is configured to change/adapt cues. Note that there is no simulation and the POMDP is learned from prerecorded data.

US10540456B2 shows a method for assessing the controllability of a vehicle. A simulation is used to predict the controllability of vehicle by a driver. Thereby, a driver is modelled by reaction time based on driver capabilities (e.g., inexperienced driver).

Furthermore, driver models can be used, e.g., as described in DE 102017214542 A1 for the verification of advanced driver assistance systems. Driver models are created using distributions from a reference dataset to model the behavior of a driver with respect to the parameters included in that reference dataset. The focus is on driving style behavior adaptation.

US 2022204020 A1 shows an approach toward simulation of driver behavior in driving automation. The approach consists of learning driver behavior from a dataset by training a generative model. This generative model can then be used to simulate driver style behavior.

Computerized means for assessing driver actions performance in response to simulated driving situations can be realized by interactive driving simulations. Examples are shown in US 11164479 B1, and US 2009181349 A1. Particularly, in US11164479B1 a virtual reality approach was adapted for both the autonomous vehicle and environment simulation for level transitions. It modeled both automated driving system and human driver to monitor the driving environment and control the autonomous vehicle. The simulated data is only used to evaluate the performance of the user in case of situational recovery and for obtaining driving competency. There is also a theory to model the perception and cognition of humans with respect to the induced workload by different activities, which is called "Multiple Resource Theory" presented by C.D. Wickens, in "Multiple resources and mental workload." Human factors 50.3 (2008): 449-455. It is describing the dependencies of modalities (e.g., visual, auditory) and stages (e.g., perception or cognition) on how human behave. Focus is especially which tasks and cues will introduce what workload on human cognition resources.

The relevant prior art is clearly separated either on the HMI applications or simulation of environment and vehicles driving behavior. The HMI application includes driving monitoring, their actions, and behaviors, whereas simulation of external situations and vehicle, the trajectories, weather and driving conditions are handled separately. Below we mention some of the gaps in the prior art on this topic. There are few works on integration of driver action and environment simulations, but they lack to present an integrated simulation with drivers' behavior, his/her interaction and driving state. Current systems lack suitable driver state detection systems and interaction strategies for effective communication between vehicle and user. Which can not only help in estimating the drivers' performance but also in the assessment of safety criticality of driving.

In the prior art on simulation, it is very hard to mimic physiological measurements even though they are very critical in driver monitor systems. Some of the measurements include physical and psychological state of the driver such as metal workload of driver, fitness, comfort state etc. This is, so as it is, not straight forward to model the details of the physical and biological process of the human body.

Even though in the prior work the simulation list of actions and recommended behaviors, those can be performed by the driver is presented, the list of signals from the autonomous system to alert the driver is clearly lacking. Indication of cues or set of cues with different degrees to warn drivers in inappropriate driving level are clear gaps.

Personalization of vehicle in driving behavior assessment is another topic covered in the literature but there is lot of challenge to collect wide varieties data with larger number of subjects due to various factor of challenges in real world data collection and preparation. Simulation comes handy to tackle this. Data generation with level compliant behavior with personalization is non-existence in the current works. One aspect of the present invention concerns increasing the safety, comfort and acceptance of Automated Driving (AD) systems.

The focus is on the communication between vehicle and user and the resulting lack of transparency of current AD systems. We provide a solution for the following drawbacks:
- Missing simulation methods for creating automatic personalized HMI systems
- Missing simulation of physiological human behaviour
- Missing models for the influence of cues by an HMI system to human drivers/occupants
- Missing data generation methods containing level compliant behavior (according to SAE J3016 levels)

A first aspect concerns a computer-implemented method for simulating human behavior in the context of interactions between a human and an HMI system based on a model of human behavior. The HMI system outputs cues to the human and the human's reaction is detected by sensors of the HMI system. The model of human behavior comprises:
A perception layer representing the human's perception of cues that are output by the HMI system based on a state vector.
A cognition layer representing the human's cognition process by taking into account the output of the perception layer and the state vector.
And a physiological layer representing a physiological response of the human depending on the output of the cognition layer and the state vector outputting an updated state vector.

The reaction of the human can be described as a transition from a current physiological state to an updated physiological state of the human.

A physiological state may comprise head position and orientation, open eyes or closed eyes, position and orientation of the hands of the human, etc.

A gaze direction of the human may be determined from the physiological state as well as information whether hand(s) of the driver are holding a steering wheel of a vehicle. The state vector may comprise the physiological state vector. A cue may correspond to a signal, a stimulation, a prompt or any other action of the HMI system which is perceptible to the human and can induce a reaction of the human.

The HMI system may comprise an HMI agent, the HMI agent controlling input data processing and cue generation. The HMI system may be denominated an HMI agent. The HMI agent may comprise a machine learning system or other type of artificial intelligence-based system.

According to an embodiment, the state vector comprises numerical information on at least one out of the group of: the physiological state of the human, a state of the HMI system and a state of the environment of the human and/or the HMI system.

In an embodiment, a level of performance of the human is calculated by a performance layer which takes into account a mental workload information. The mental workload information can be determined based on the state vector by using a multiple resource model layer.

According to an embodiment, the state vector comprises at least one of the following:
- (traffic) situation complexity derived from a (traffic) scenario where the HMI system is part of,
- characteristics of the human like e.g., age, handicap,
- additional factors like e.g., trust of the human in the HMI system or in an automated vehicle comprising the HMI system,
- noise level in an automated vehicle comprising the HMI system,
- vibration level in an automated vehicle comprising the HMI system,
- lighting conditions in an automated vehicle comprising the HMI system, and/or
- exterior lighting conditions for an automated vehicle comprising the HMI system.

In an embodiment, the physiological layer uses the current physiological state vector t (time t) as an input and outputs an updated physiological state vector t+1 (one step later than time t).

A second aspect of the invention concern using the computer-implemented method for simulation to generate synthetic training or testing or validation data comprising associated tuples of input cue and input state vector and the related output state vector. The output state vector may correspond to the output (updated) physiological state vector as any other state vector elements regularly remain unchanged.

A third aspect concerns a method for training a machine learning system to be deployed in an HMI system for optimizing the communication from the HMI system to the human by using training data comprising the generated synthetic training data. The method comprises the steps:
- Given an output state vector corresponding to a desired physiological response of the human for a given input state vector, the optimal cue to be generated by the HMI system is identified during the training.
- Therefore, a reward representing the conformity of the human's physiological response with a desired physiological response is calculated.
- The desired physiological response is depending on the task the HMI system shall accomplish through generating and outputting the optimal cue.

In a task concerning communicating by the HMI system to the human being a driver of an automated vehicle, a suitable driver state detection system and interaction strategies for effective communication between the vehicle and the driver are enabled. Alternative or complimentary tasks comprise:
- Assisted or Automated Driving: HMI systems for drivers
- Aviation: HMI systems for pilots and co-pilots
- Rail transport: HMI systems for train drivers
- Control of machines: HMI systems for machine users.

One possibility to train the machine learning system, which is, for example, a decision tree learning system, a support vector machine, a regression analysis-based learning system, a Bayesian network, a neural network, or a convolutional neural network, comprises the use of training input data (input state vector and output state vector corresponding to the desired physiological response of the human) and associated target interaction (optimal cue to be generated by the HMI system) are provided. Using the machine learning system, cues are generated from the training input. The goal of the training is to ensure that the generated cues are as similar as possible to the training target interactions (optimal cues) without overfitting. For this purpose, the remaining deviations between the generated cues and the optimal cues are determined. The smaller these deviations are, the higher becomes the calculated reward. E.g., via backpropagation parameters of the machine learning system can be adapted depending on the calculated reward. This is repeated until a predetermined reward has been obtained or until signs of overfitting occur.

A fourth aspect concerns a method for testing or validating a trained machine learning system using synthetic test or validation data. For testing or validating, synthetic input cue and input state vector are used as input for the trained machine learning system and the state vector output from the machine learning system is compared to the output state vector of the tuple of the test or validation data. For the comparison a threshold can be defined and as long as the difference between the state vector output from the machine learning system to the output state vector of the test or validation data is not exceeding the threshold, the test or validation is successful.

A fifth aspect concerns an HMI system comprising a cue generating device, at least one sensor device and a trained machine learning system. The cue generating device is configured to generate and output visual, auditory and/or tactile cues to the human. The at least one sensor is configured to detect a reaction of the human. The machine learning system has been trained or tested or validated.

A sixth aspect concerns a vehicle comprising an HMI system where the human is the driver of the vehicle.

According to an embodiment, the vehicle is configured to operate in different levels of automation. The strategy of the HMI system comprises monitoring/assessing whether the physiological state of the driver is compliant to the current level of automation.

A further aspect concerns a computer program comprising instructions which, when the program is executed by a computer, cause the computer to infer the trained, tested or validated machine learning system.

A computer may comprise a programmable hardware device which can in particular be embedded, e.g., a microcontroller or-processor, a CPU, a GPU, a tensor processing unit (TPU), a digital signal processor (DSP), an ASIC (application specific integrated circuit), an FPGA (field programmable gate array) or the like.

A further aspect concerns a computer-readable data carrier having stored thereon the computer program.

Another aspect concerns a data carrier signal carrying the computer program.

According to a further aspect of this invention, a simulation called Model-Based Simulation (MBS), is proposed that can simulate human behavior in three different levels: perception, cognition and physiological. In addition, it is capable to also model the influence of cues (e.g., a displayed warning symbol) to a human driver. To this end, the simulation also evaluates if a driver or occupant is in a level-compliant state (e.g., not reading a book when having the task to monitor the automated vehicle) given a set of configurable rules. Furthermore, the simulation models also statistical behavior so that it captures different behaviors and "randomness" in human behavior. All parameters are obtained by literature values, assumptions or through own studies. In the following we introduce the application and then explaining the simulation method/tool in detail.

According to a further aspect, the following target application is proposed:
In vehicles with partially or fully automated functionality, the rights and obligations of the driver in different SAE levels are often not transparent and difficult to understand. This is especially true for the "Partial Automation" (L2) and "Conditional Automation" (L3) levels, as well as when frequently switching between different levels and different driving contexts, such as when driving through a city on a country road. Here, the driver must continuously monitor vehicle behavior and be able to take over vehicle control as quickly as possible in safety-critical situations. This conflicts with the human ability to maintain monotonous tasks over a longer period of time. At the same time, a high level of responsibility lies with the driver, since intervention becomes necessary especially in such complex situations in which the automation system is no longer able to perform vehicle control independently.

Therefore, there is the problem that long and monotonous phases of a partially automated journey could require active intervention by the driver, for which only a very limited amount of preparation time is available. In addition, prolonged, incident-free use of a partially automated vehicle can lead to subjective trust in the system rising to unjustified heights and the driver's assessment of the need for monitoring not corresponding to the actual need (keyword: "over trust"). It is therefore essential to continuously match the driver's behavior and attention to the requirements of the current automation level and the respective driving situation and to support him/her even in the supposedly monotonous phases in order to counteract the aforementioned problem.

In higher automation levels (L4/L5), this problem is less acute because the reparation times for a transition to lower automation levels or manual driving are significantly longer and the vehicle is also capable of mastering complex situations without the driver's assistance. Here, it is more a matter of strengthening the confidence of inexperienced users of an automated vehicle in such a system and making the rare transitions to lower automation levels or manual driving as pleasant and as safe as possible.

For such systems, an intelligent interaction between a human and the system is required. As described above, we propose a simulation to model human behavior to learn an intelligent HMI system.

Further fields of use for embodiments of the invention comprise any area where human-machine interaction simulation is required, e.g.:
- Aviation: HMI systems for pilots and co-pilots
- Rail transport: HMI systems for train drivers
- Control of machines: HMI systems for machine users.

Regarding a verification of a partially, highly or fully automated ADAS system: embodiments of the invention can be used to measure the trust of a driver in the automation of the vehicle.

Further embodiments of the invention are described and explained in further detail with respect to figures.

The figures show:
Fig. 1 a general concept of a simulation loop (1) of an HMI system (11) and a Model-based Simulation (10),
Fig. 2 layers of the model for the simulation,
Fig. 3 a flow chart on how the cues (104) are processed by the perception layer (21) of the MBS (10),
Fig. 4 a flowchart of the cognition layer (22),
Fig. 5 a flowchart of the physiological layer (23), and
Fig. 6 a flowchart for the calculation of the mental workload (250).

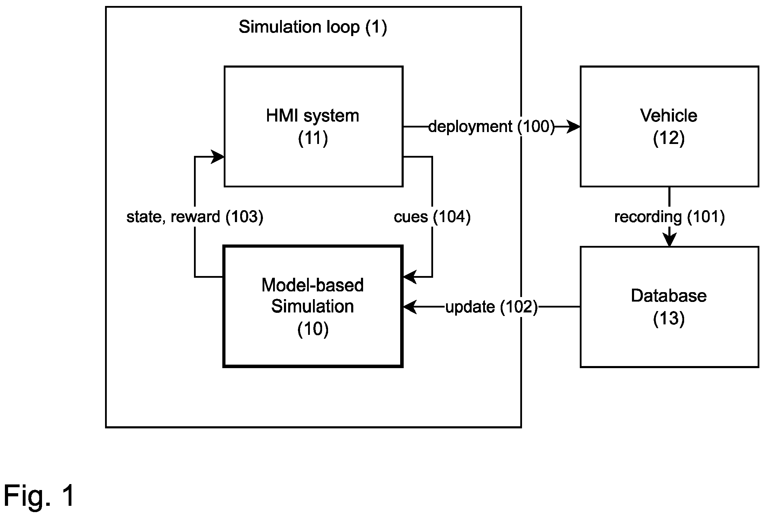

Fig. 1 shows an embodiment representing a general concept. A model-based simulation (10) simulates human behavior based on models and assumptions. It outputs a state and a reward (103). The state can contain driver information (e.g., gaze, pose or activity), vehicle information (e.g., current SAE level, planed route, steering wheel angle) or environmental information (e.g., scene complexity, nearby objects). The reward tells the HMI Agent (11) how "good" the activated cues (104) were to reach a specified goal. The goal of an exemplary embodiment is to keep a driver in a level-compliant state. Different goals like e.g., reducing motion sickness can also be accomplished by alternative or enhanced embodiments. The cues (104) are interaction strategies like e.g., displaying an icon on a display, modifying interior lighting, or starting a speech interaction. With the simulation loop (1) between the model-based simulation (10) and the HMI agent (11), the HMI agent (11) can be trained to find optimal interaction strategies for a dedicated goal. Once an HMI agent (11) is trained, it can be deployed (100) into a vehicle (12).

### Simulation Method/Tool:

The model-based simulation implements human-behavior processing, test data generation and visualization of the result.

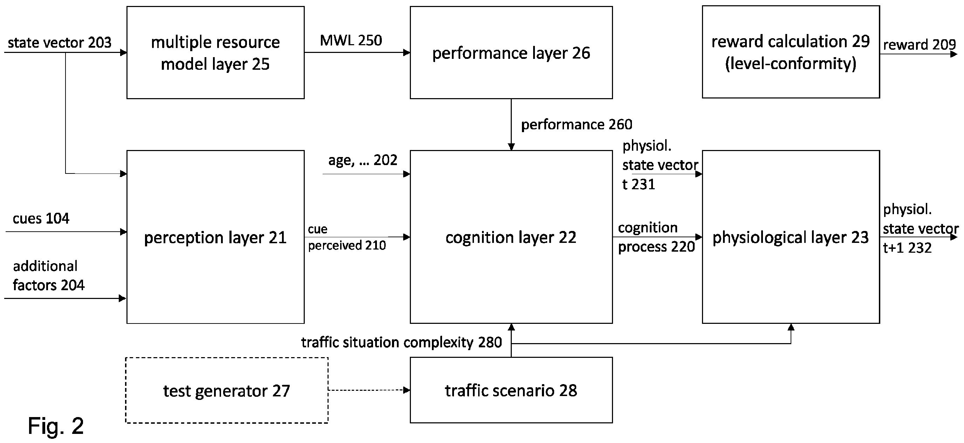

Fig. 2 shows a detailed schematic flowchart on how the data is processed by the MBS (10). It has three main layers, which is a perception layer (21), a cognition layer (22) and a physiological layer (23). Apart from that, a multiple resource model layer (25) and a performance layer (26) are estimating the mental workload (MWL 250) impacting the performance (260) as input to the cognition layer (22). Further inputs to the perception layer (21) are comprising states (203), cues (104) and additional factors 204 such as trust in the automated system. States (203) are also input to the multiple resource model layer (25).

The perception layer (21) provides as input to the cognition layer (22) the information whether and to which extend the cues (104) have been perceived (210). Additional input to the cognition layer (22) may comprise the age and additional characteristics (202) of the human as well as information on the complexity of the traffic situation (280). The traffic scenario (28) that is the basis for the complexity of the traffic situation (280) can be obtained from a test generator (27). The complexity of the traffic situation (280) also serves as one input to the physiological layer (23).

The cognition layer (22) provides information on whether and to which extend a cognition process (220) is done as input to the physiological layer. The actual physiological state vector t (231) represents the actual physiological state of the human, e.g., head orientation and hand(s) pose. The physiological layer outputs an updated physiological state vector t +1 (232).

The reward (209) will be calculated by a reward calculation module (29). The reward function takes the physiological state vector t (231) as input as well as the last output of the HMI agent (cues) and then implements a custom function that describes the goal of the HMI agent. E.g., for level-compliant driving a set of rules can be defined for each SAE layer, which driver activities are (not) allowed: while driving in SAE level 2 requires the driver to not take off the hands from the steering wheel longer than a maximum time, this is not required in SAE level 3 as long as the automated driving features are engaged. The driver is not allowed to sleep while the automated driving features are engaged in SAE level 3, however. In case of a takeover request because the automated driving features will be disengaged, the driver must be attentive, start to look at the road ahead and take back the hands to the steering wheel.

The calculated reward is then used for the training process of HMI agent as part of the loss function. As a high-level explanation: The reward is used to tell the HMI agent if it took the right or wrong action according to the specified goal.

In the following we describe all components of the MBS (10) in more detail.

The perception layer (21) is responsible for the detection, recognition, and perception of cues (104). The idea is to group cues (104) by type, like visual, auditory and tactile cues. Each one is processed independently.

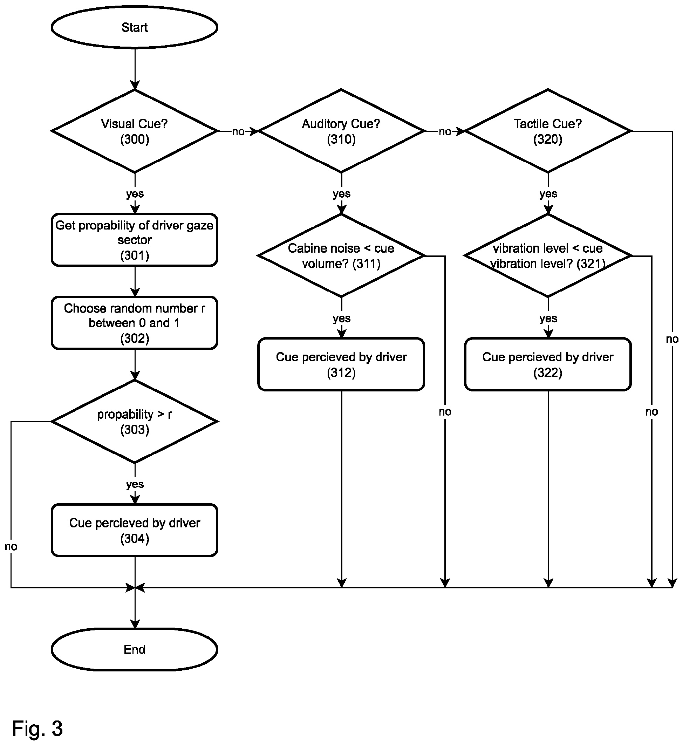

Fig. 3 shows a flow chart on how the cues (104) are processed by the perception layer (21) of the MBS (10).

It starts by checking if the received cue is visual (300), auditory (310) or tactile (320), which are also called perception channels. There can be also more channels.

If the cue is visual (300), then first the probability that the driver is looking at the sector where the cue is visualized (301) is obtained. Then, a random number r between 0 and 1 is drawn from a uniform distribution (302). If the probability is greater than the random number r (303) then the state that the driver perceived the cue is set to true (304). Otherwise, the driver has not perceived the cue in this simulation step.

If the cue is auditory (310), then it is tested, if the current cabin noise is less than the cue volume by calculating a signal to noise ratio (311). If the test is true, then the state that the driver has perceived the cue (312) is set to true, otherwise false.

If the cue is tactile (320), then it is tested, if the current vibration level of the vehicle (12) is less than the vibration strength of the cue (321). If this is true, then the state that the driver has perceived the cue (323) is set to true, otherwise false.

In case there is an unsupported cue type (channel), nothing happens.

In other words, a visual cue (300) is assumed to be detected by a driver if the driver gazes the defined sector, where the cue is depicted. In the MBS (10), each visual cue (300) can be configured by the information about sectors in the vehicle (12) and the probability with which the cue can be recognized by the driver.

For example, the probability of the cue-sector is very high and neighboring sectors with falling probability. There are some additional factors, which eventually reduce the probability of recognizing a cue, which can be trust of the driver in the automation.

An auditory cue (310) is recognized by the driver if the cue volume-level is higher than in the volume in the vehicle (e.g., radio or construction noise) (311). In addition, the recognition can again be modelled by probabilities in dependency of the absolute distance between the auditory cue and the vehicle volume.

Furthermore, also the case when headphones are on and when the driver is in dialog is considered and changes the recognition probabilities.

A tactile cue (320) is handled like the auditory cue based on the vibration strength of the cue vs. the vibration level in the vehicle (321).

When the perception layer has finished the processing, an output is generated. The output contains the information on if any cue (104) was perceived (recognized) and whether the perceived cue type is visual, auditory or tactile.

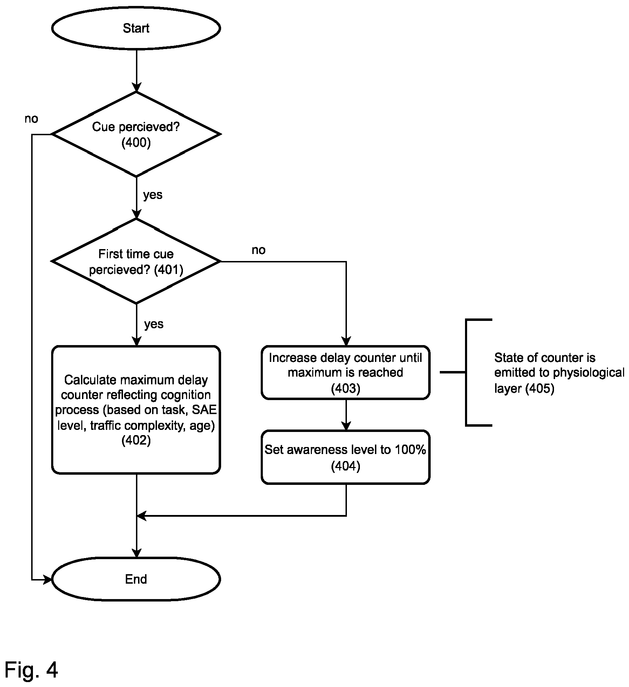

In Fig. 4, a flowchart of the cognition layer (22) is depicted.

START: Step 400 answers the question whether a cue has been perceived. If not the cognition layer is finished (END).

If the cue has been perceived the following step 401 asks whether it is the first time that the cue is perceived.

If the answer is yes, in step 402 the maximum delay counter is calculated by reflecting the cognition process. This takes into account the task, e.g., the SAE level, the traffic situation complexity (280) and the age or further additional characteristics (202) of the human.

If the answer to decision step 401 is no, a delay counter is increased until a maximum number is reached in Step 403. The current state of this delay counter is emitted to the physiological layer in step 405. In a subsequent step 404 of the cognition layer, the awareness level is set to 100%.

In other words, the cognition layer (22) calculates an awareness level of the perceived cue. This level determines the probability if a driver is reacting to a cue. First the maximum length of the awareness process can be calculated by using a normal distribution depending on the executed secondary task, traffic complexity, performance based on MWL (mental workload), automation level (e.g., SAE level) and additional factors like driver-age or fatigue-level. Then over time the awareness level is increased until the maximum length of the awareness-processes is reached resulting in a 100% awareness.

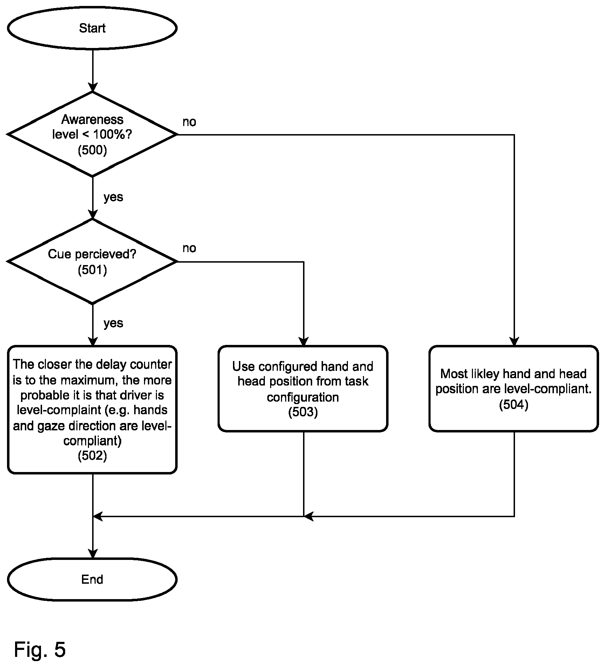

Fig. 5 shows an embodiment of the physiological layer (23). In general, the physiological layer (23) computes the body state of a driver, e.g., the head_orientation and hand(s)-position depending on executed secondary task and/or recognized cues.

START: Step 500 answers the question whether the awareness level is lower than 100%. In case of full awareness, the physiological layer is finished (END) after concluding in step 504 that hand and head positions are most likely level-compliant. If the awareness level is lower than 100% step 501 asks whether the cue has been perceived.

If the answer is yes, in step 502 an estimation is made which outputs a probability whether the driver is currently level-compliant. Thereby it is assumed that the closer the delay counter is to the maximum, the more probable the level compliance of the driver is (e.g., hands and gaze direction are level-compliant).

If the cue has not been perceived according to step 501, the configured (default) hand and head position from a task configuration are used (step 503).

In other words, when the driver is level-compliant and no cue is active, then the head-orientation and hand(s)-position are with high probability according to executed task. The default head_orientation and hand(s)-position are defined in the task configuration. Note that the MBS (10) can be configured for each task. In case that the driver is not level-compliant, and a cue was recognized and additionally the driver is aware of the cue, then the head-orientation and hand(s)-position change to the level-compliant position. This transition is most likely the closer the higher the awareness is.

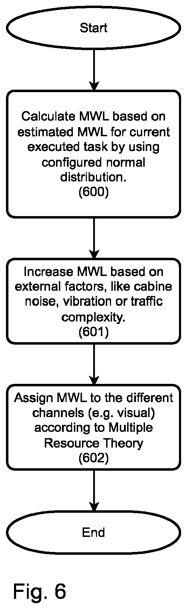

Fig. 6 shows a flow chart of the calculation of the mental workload (MWL 250). The MWL calculation is performed in the multiple resource model layer (25). START: step 600 calculates the MWL based on an estimated MWL for the current executed task by using a configured normal distribution.

In step 601 the MWL is increased based on external factors like cabin noise, vibration or traffic situation complexity.

In step 602, the MWL is assigned to the different channels (e.g., visual) according to the Multiple Resource Theory. This step concludes the MWL calculation (END).

The MWL calculation is based on the multiple resource theory, where each channel (e.g., visual, auditory or tactile) can be occupied by tasks (e.g., reading a book occupies the visual channel).

Furthermore, also the perception of cues increases the occupancy of a channel, and it might also be the case that a cue is most likely not perceived when the respective channel is occupied. Based on the occupancy of all channels, the MWL is calculated. Additionally, factors like traffic complexity, can increase or decrease the MWL.

Based on the MWL a performance level is computed that influences the awareness calculation of the cognition layer. The performance level does not have an influence, when a medium MWL is present and will reduce the awareness level when the MWL is low (driver is bored) or high (driver is overwhelmed).

The MWL baseline-values can be configured via the task configuration and cue configuration. The defined MWL value is only the expected value, while during simulation the concrete MWL values are drawn from a normal distribution with the mean of the expected value.

The traffic scenario controls the traffic complexity (having an impact on MWL and awareness level), which can be configured by parameters like street type, number of traffic participants or weather conditions.

In our application, the goal is that a driver is in a level-compliant state. Therefore, for each SAE level a set of rules can be defined that determine if a driver is level compliant or not based on the current states. In the model-based simulation, the rules are used to determine if a driver is level-compliant or not and that is outputted for e.g., an HMI system.

Advantages of embodiments of the invention are:
- It is infeasible to train an HMI agent (e.g., with reinforcement learning) in the real vehicle and also it is hard to get real data in this domain. Therefore, a simulation is required.
- The model-based simulation provides the simulation of physiological behaviors
- The model-based simulation can also be used to reflect real perception functions (e.g. pose, gaze including their noise variations and performance, ...)
- The required intensity of the cues (modalities) can be simulated to optimize interaction strategies
- Since the goal, and therefore the reward, can be changed the simulation can be transferred to other use cases (not limited to level-compliance driving)

## Claims

1. Computer-implemented method for simulating human behavior in the context of interactions between a human and an HMI system (11) based on a model of human behavior, where the HMI system (11) outputs cues (104) to the human and the human's reaction is detected by sensors of the HMI system (104), the model of human behavior comprising:
a perception layer (21) representing the human's perception of cues (104) output by the HMI system (11) based on a state vector (203),
a cognition layer (22) representing the human's cognition process (220) by taking into account the output of the perception layer (21) and the state vector (203), and
a physiological layer (23) representing a physiological response of the human depending on the output of the cognition layer (22) and the state vector (203, 231) outputting an updated state vector (232).

2. Method according to claim 1, wherein the state vector (203) comprises numerical information on at least one out of the group of: the physiological state of the human (231), the state of the HMI system (11) and the state of the environment of the human and/or the HMI system (11).

3. Method according to claim 1 or 2, wherein a level of performance (260) of the human is calculated by a performance layer (26) which takes into account a mental workload (250) information, the mental workload 250 information being determined based on the state vector 203 by using a multiple resource model layer 25.

4. Method according to any of the preceding claims, wherein the state vector comprises at least one of the following:
- traffic situation complexity (280) derived from a traffic scenario (28) where the HMI system is part of,
- characteristics (202) of the human like e.g., age, handicap,
- additional factors (204) like e.g., trust of the human in the HMI system (11) or in an automated vehicle comprising the HMI system (11),
- noise level in an automated vehicle comprising the HMI system (11),
- vibration level in an automated vehicle comprising the HMI system (11),
- lighting conditions in an automated vehicle comprising the HMI system (11),
- exterior lighting conditions for an automated vehicle comprising the HMI system.

5. Method according to any of the preceding claims, wherein the physiological layer (23) uses the current physiological state vector t (231) as an input and outputs the updated physiological state vector t+1 (232).

6. Using the method according to one of claims 1 to 5 to generate synthetic training or testing or validation data comprising associated tuples of input cue (104) and input state vector (203) and the related output state vector (232).

7. Method for training a machine learning system to be deployed in an HMI system (11) for optimizing the communication from the HMI system (11) to the human by using training data comprising the synthetic training data generated according to claim 6, the method comprising the steps:
- given an output state vector (232) corresponding to a desired physiological response of the human for a given input state vector (203, 231) the optimal cue (104) to be generated by the HMI system (11) is identified during the training,
- therefore, a reward (209) representing the conformity of the human's physiological response with a desired physiological response is calculated,
- the desired physiological response depending on the task the HMI system (11) shall accomplish through generating and outputting the optimal cue (104).

8. Method for testing or validating a machine learning system that has been trained according to claim 7 using synthetic test or validation data generated according to claim 6.

9. HMI system (11) comprising a cue (104) generating device, at least one sensor device and a trained machine learning system, wherein
the cue generating device is configured to generate and output visual, auditory and/or tactile cues (104),
the at least one sensor is configured to detect a reaction of the human and
the machine learning system has been trained by a method according to claim 7 or tested or validated by a method according to claim 8.

10. Vehicle (12) including an HMI system (11) according to claim 9 where the human is the driver of the vehicle (12).

11. Vehicle (12) according to claim 10 where the vehicle (12) is configured to operate in different levels of automation and where the strategy of the HMI system (11) comprises monitoring/assessing whether the physiological state of the driver is compliant to the current level of automation.

12. Computer program comprising instructions which, when the program is executed by a computer, cause the computer to infer the machine learning system which has been trained by a method according to claim 7 and/or tested or validated by a method according to claim 8.

13. A computer-readable data carrier having stored thereon the computer program of claim 12.

14. A data carrier signal carrying the computer program of claim 12.
